Europäisches Patentamt

European Patent Office

Office européen des brevets

(11) Veröffentlichungsnummer: **0 451 726 A1**

## EUROPÄISCHE PATENTANMELDUNG

(21) Anmeldenummer: 91105425.2

(22) Anmeldetag: 05.04.91

(51) Int. Cl.⁵: **H02B 1/052**

(30) Priorität: 09.04.90 DE 4011447

(43) Veröffentlichungstag der Anmeldung:
16.10.91 Patentblatt 91/42

(84) Benannte Vertragsstaaten:
AT BE CH DE ES FR GB IT LI

(71) Anmelder: **ABB PATENT GmbH**
**Kallstadter Strasse 1**
**W-6800 Mannheim 31(DE)**

(72) Erfinder: **Schmitt, Volker**
**Ringstr. 41**
**W-6919 Bammental(DE)**
Erfinder: **Muders, Erwin**
**Weinbrenner Str. 55**
**W-6900 Heidelberg(DE)**
Erfinder: **Goehle, Rolf**
**Im Bubenwingert 16**
**W-6906 Leimen(DE)**
Erfinder: **Schmitt, Hermann**
**Im Vogelskorb 1**
**W-6803 Edingen(DE)**

(74) Vertreter: **Rupprecht, Klaus, Dipl.-Ing. et al**
**c/o ABB Patent GmbH, Patentabteilung,**
**Postfach 10 03 51**
**W-6800 Mannheim 1(DE)**

(54) Schnellbefestigung für ein elektrisches Installationsgerät.

(57) Die Erfindung beschreibt eine Schnappbefestigung mit einem eine bewegliche Nase (14) aufweisenden Schieber (15), der aus zwei Gleitstücken (16, 26) besteht, von denen das erste Gleitstück (16) das zweite Gleitstück (26) ringförmig umgibt und die bewegliche Nase (14) enthält. Das zweite Gleitstück (26) ist in einer Stellung bezogen auf das erste Gleitstück (16) verrastbar, dergestalt, daß der Schieber (15) als normaler Rastschieber für das Installationsgerät (11) dient. Nach Entrasten der Verrastung zwischen dem ersten und dem zweiten Gleitstück kann der Schieber (15) aufgrund der Abmessungen des Innenraumes des ersten Gleitstückes (16) bezogen auf die Länge des zweiten Gleitstückes (26) so weit von der Normprofiltragschiene (10) weggezogen werden, daß das Installationsgerät (11) relativ zur Normprofiltragschiene so weit verschoben werden kann, daß es von einer evtl. vorgesehenen, mehrere auf der Normprofiltragschiene (10) aufgereihte Installationsgeräte (11) freikommt und danach senkrecht zur Normprofiltragschiene (10) abgehoben werden kann.

Fig. 1

Die Erfindung betrifft eine Schnellbefestigungsvorrichtung für ein elektrisches Installationsgerät gemäß dem Oberbegriff des Anspruches 1.

Eine Schnellbefestigung oder eine Schnappbefestigung dient dazu, elektrische Installationsgeräte, insbesondere Leitungsschutzschalter auf einer Normprofiltragschiene aufzuschnappen. Die Normprofiltragschiene ist im allgemeinen als eine Hutprofilschiene ausgebildet und zum Aufschnappen wird die feste Nase am Installationsgerät hinter eine Kante der Hutprofilschiene eingehakt und die bewegliche Nase über die andere Kante der Hutprofilschiene gerastet.

Bei den bekannten, bis heute üblichen Schnappbefestigungen ist die Befestigungbewegung immer eine Drehbewegung um die Kante, hinter die die feste Nase eingehakt wird. Wenn dabei an einer Klemme, insbesondere an der Klemme, in deren Bereich sich der bewegbare Schieber befindet, eine mehrere nebeneinander auf der Hutprofilschiene aufgeschnappte Installationsgeräte verbindende Anschlußschiene oder ein Phasenschienenblock angeschlossen ist, dann muß, um ein Installationsgerät, insbesondere einen Leitungsschutzschalter, demontieren zu können, zunächst die Stromschiene oder der Phasenschienenblock entfernt werden. Dies hat eine Unterbrechung der Stromversorgung anderer Netze zur Folge, die über die gleiche Stromschiene oder den Phasenschienenblock mit Strom versorgt werden.

Aus der DE-OS 37 32 434 ist eine Schnappbefestigung mit einer Schieberanordnung bekannt geworden, die an einem Schiebeelement und einem darin geführten Schieber mit der beweglichen Nase gebildet ist; das Schiebeelement ist auf der Befe-stigungsseite eines Leitungsschutzschalters ver-schiebbar angebracht und in zwei Stellungen verrastbar. Das Schiebeelement ist so weit verschiebbar, daß das Installationsgerät auf der Hutprofiltragschiene in Richtung seiner Bodenebene oder Bodenfläche verschiebbar ist, so daß das Gehäuse frei von der Stromschiene ist. Dadurch ist es ohne weiteres möglich, ohne Behinderung durch die ein-gebaute Stromschiene das elektrische Installations-gerät senkrecht zur Normprofiltragschiene von dieser abzunehmen; eine Verdrehung um die sog. feste Nase und damit eine Demontierung der Stromschiene mit Abschaltung anderer an der glei-chen Stromschiene angeschlossener Installations-geräte ist nicht mehr erforderlich.

Ähnliche Lösungen sind beispielsweise auch aus der DE-GM 83 13 273 oder in einer etwas anderen Ausgestaltung aus der DE-OS 38 19 669 bekannt geworden.

Bei den bekannten Anordnungen besteht das Problem, das mehrere einzelne Teile erforderlich werden, die die Schnappverbindung und damit das elektrische Schaltgerät verteuern.

Aufgabe der Erfindung ist es, die Schnappverbindung oder Vorrichtung der eingangs genannten Art zu verbilligen.

Diese Aufgabe wird erfindungsgemäß gelöst durch die kennzeichnenden Merkmale des Anspruches 1.

Weitere vorteilhafte Ausgestaltungen der Erfindung sind den Unteransprüchen zu entnehmen.

Erfindungsgemäß besteht der Schieber aus zwei ineinander gesetzten Teilen, nämlich dem rahmenförmigen ersten Gleitstück und dem innerhalb des Innenraumes des Rahmens verschiebbar angeordneten zweiten Gleitstück; in der sog. Befestigungsstellung, in der Stellung, in der das Schaltgerät auf der Hutprofilschiene aufgeschnappt ist, sind die beiden Gleitstücke fest miteinander verbunden, so daß die zwischen dem Gehäuse des Installationsgerätes, also einem ortsfesten Punkt, und dem zweiten Gleitstück angeordnete Feder den gesamten Schieber, also die beiden Gleitstücke, gegen die Kante der Normprofilschiene drückt.

Die Verbindung zwischen den beiden Gleitstük-ken ist in bevorzugter Weise eine Rastverbindung, die nur mit einer gewissen Kraft gelöst werden kann, damit die oben erwähnte für die Halterung des Installationsgerätes auf der Normprofiltragschiene erforderliche feste Verbindung der Gleitstücke bewirkt und gesichert ist. Sie soll aber auch lösbar sein, damit das erste Gleitstück bezogen auf das zweite Gleitstück und damit auch bezogen auf das Gehäuse so weit nach außen verschoben werden kann, daß es so weit von der Normprofiltragschiene freikommt, daß das Schaltgerät auf der Normprofiltragschiene senkrecht zu dieser verschoben und abgehoben werden kann.

Anhand der Zeichnung, in der ein Ausführungs-beispiel der Erfindung dargestellt ist, sollen die Er-findung sowie weitere vorteilhafte Ausgestaltungen und Verbesserungen der Erfindung näher erläutert und beschrieben werden.

Es zeigen:

Figur 1     eine Schnittansicht durch einen Leitungsschutzschalter mit eingebautem Schieber,

Figur 2     eine Aufsicht auf den Schieber in einer ersten Stellung,

Figur 3     eine Aufsicht auf den Schieber in einer zweiten Stellung und

Figur 4     eine perspektivische Darstellung eines zweiten Gleitstückes.

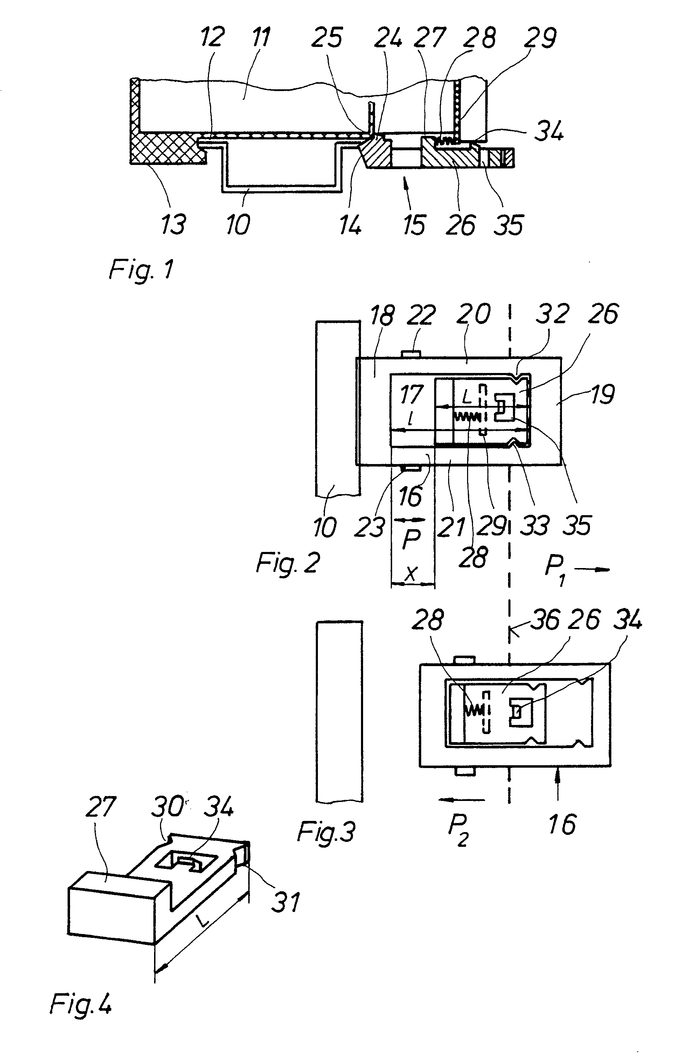

Es sei nun Bezug genommen auf die Figur 1. Auf einer als Hutprofiltragschiene ausgebildeten Normprofiltragschiene 10 ist ein nur teilweise sichtbares und sehr schematisch dargestelltes elektrisches Installationsgerät, in bevorzugter Weise ein Leitungsschutzschalter 11 aufgeschnappt. Der Leitungsschutzschalter 11 besitzt an seiner Bodenseite eine U-förmige Ausnehmung 12, an deren einer Seitenwand eine feste Nase 13 und an deren anderen Seitenwand eine bewegbare Nase 14 angeordnet ist. Die bewegbare Nase 14 ist an einer Schieberanordnung 15 angeformt, die im folgenden näher beschrieben werden soll.

Die Schieberanordnung 15 ist gebildet aus einem ersten Gleitstück 16, das eine geschlossene Rahmenform mit einem Innenraum 17 aufweist; das erste Gleitstück besitzt dabei zwei in Abstand zueinander angeordnete Querstege 18 und 19 sowie deren freie Enden miteinander verbindende Längsstege 20 und 21. Am Quersteg 18 ist die Nase 14 angeformt, so daß sich der Quersteg 18 gegen die freie Kante der Hutprofilschiene 10 anlegt. Im Bereich des Quersteges 18, beidseitig an den Längsstegen 20 und 21 angeformt, sind Führungsnasen 22 und 23 vorgesehen, welche in Nuten (nicht dargestellt) im Gehäuse des Leitungsschutzschalters 11 eingreifen und so zur längsverschieblichen Führung in Pfeilrichtung P der Schieberanordnung dienen. Im Bereich des Quersteges 18 besitzt das erste Gleitstück 16 eine Nase 24, die gegen eine Kante 25 am Gehäuse des Leitungsschutzschalters 11 gedrückt ist bzw. dort anschlägt und dazu dient, ein Verschieben der Schieberanordnung 15 in die Ausnehmung hinein parallel zu dem Boden des Leitungsschutzschalters zu verhindern.

Im Innenraum 17 des ersten Gleitstückes befindet sich ein zweites Gleitstück 26, welches eine ebenfalls länglich rechteckige Kontur aufweist, wobei die Länge L des zweiten Gleitstückes kleiner ist als die Länge l des Innenraumes quer zur Längserstreckung der Hutprofilschiene 10 gemessen. Die Längendifferenz l-L entspricht dem Maß, das erforderlich ist, um das Installationsgerät frei von einer Stromschiene zu bekommen (siehe unten).

Das zweite Gleitstück besitzt an dem Ende, welches im montierten Zustand dem Quersteg 18 zugewandt ist, eine senkrecht dazu hochstehende Wandung 27, die als Anschlag für eine Druckfeder 28 dient; das andere Ende der Druckfeder 28 ist an einem Fortsatz 29 des Leitungsschutzschalters 11 angelegt. Im montierten Zustand legt sich das zweite Gleitstück nahe an den Quersteg 19 an, wobei in in den Längskanten des zweiten Gleitstückes 26 eingebrachte Vertiefungen 30 und 31 Vorsprünge 32 und 33 an den Innenseiten der Längsstege 20 und 21 eingreifen, so daß zweite Gleitstück formschlüssig über die Nasen und Nuten 30/32; 31/33 am ersten Gleitstück 16 festgehalten ist. Auf der dem Gehäuse 11 zugewandten Seite des zweiten Gleitstückes ist eine weitere Verrastnase 34 angeformt, die in eine Durchbrechung 35 am zweiten Gleitstück hineinragt bzw. an drei Seiten von dieser Durchbrechung 35 umgeben ist. Die Durchbrechung 35 dient beispielsweise dazu, daß der Schieber bzw. die Schieberanordnung 15 mit einem Schraubendreher oder einem geeigneten

Werkzeug in Pfeilrichtung $P_1$ von der Hutprofilschiene weggedrückt werden kann.

In der in Figur 2 dargestellten Lage sind die beiden Gleitstücke 16 und 26 praktisch fest miteinander verbunden und bilden somit eine Einheit, die als normaler Schieber angesehen werden kann, der von der Druckfeder 28 hin gegen die freie Kante der Hutprofiltragschiene 10 gedrückt wird.

Wenn der Leitungsschutzschalter 11 senkrecht zur Hutprofilschiene 10 von dieser abgehoben werden soll, dann wird die Schieberanordnung in ihrer Gesamtheit in Pfeilrichtung $P_1$ gedrückt, wobei das erste Gleitstück 16 bezogen auf das zweite Gleitstück 26 noch zusätzlich um den Betrag X, der der Längendifferenz l-L gleicht, verschoben werden kann. Zu diesem Zweck wird die Feder-Nut-Verbindung zwischen den Nasen 32/33 und den Nuten 30/31 gelöst und das erste Gleitstück wird weiter in Pfeilrichtung $P_1$ verschoben, bis die Innenfläche des Quersteges 18 gegen die Stirnfläche des zweiten Gleitstückes 26 mit der Wandung 27 anliegt. In diesem Falle gelangt die Nase 34 hinter eine freie Endkante 36 des Leitungsschutzschalters, so daß das Gleitstück 26 mittels der Feder 28 bezogen auf den Leitungsschutzschalter 11 festgelegt ist: die Feder 28 drückt das zweite Gleitstück in Pfeilrichtung $P_2$ und damit die Nase 34 gegen das Gehäuse. Der Betrag X entspricht dem Betrag um den der Leitungsschutzschalter 11 zu verschieben ist, um von einer Stromschiene zu kommen.

Um die Schnappbefestigung bzw. die Schieberanordnung aus der Stellung, die in Figur 3 dargestellt ist, wieder in die Stellung, die in Figur 2 dargestellt ist, zu verbringen, wird die Nase 34 hinter dem Gehäuse 36 bzw. der Gehäusekante 36 weggedrückt bzw. außer Eingriff mit dieser gebracht, so daß insgesamt die Anordnung verschoben werden kann, bis die Nasen 32/33 in die Nuten 31/30 eingreifen können. Es besteht natürlich auch die Möglichkeit, zunächst das erste Gleitstück bezogen auf das zweite Gleitstück zu verschieben, da dieses aufgrund der Nase 34 festgehalten ist, ist das Einrasten der Nasen 32/33 am ersten Gleitstück in die Nuten 30/31 am zweiten Gleitstück sehr einfach. Nach Verbindung der beiden Gleitstücke kann dann die Nase 34 außer Eingriff mit dem Gehäuse bzw. mit der Gehäusekante 36 gebracht werden, so daß die Feder 28 die Schieberanordnung automatisch gegen die Hutprofilschiene 10 drückt.

Die Funktion der Nase 24 kann natürlich auch von der Nase 34 wargenommen werden; in diesem Falle würde die Nase 24 wegfallen. Die Nase 34 könnte auch wegfallen; nur dann müßte die Schieberanordnung 15 in der in Figur 3 gezeigten Lage manuell festgehalten werden, was jedenfalls unbequem ist. Das Vorsehen der Nase 34 ist für die Hanhabung von Vorteil.

## Patentansprüche

1. Vorrichtung zur Schnappbefestigung eines elektrischen Installationsgerätes, insbesondere eines Leitungsschutzschalters, auf einer Normprofiltragschiene, insbesondere auf einer Hutprofilschiene, mit einer festen und einer an einem federnd gegen die Normprofiltragschiene beaufschlagten Schieber angeordneten beweglichen Nase, die im montierten Zustand des Installationsgerätes hinter Kanten der Normprofiltragschiene greifen, wobei der Schieber aus einer ersten Stellung, in der er gegen die Normprofiltragschiene gedrückt ist, in eine zweite Stellung verschiebbar ist, in der er soweit außer Eingriff mit der Normprofiltragschiene steht, daß das Installationsgerät senkrecht zur Normprofiltragschiene von dieser abnehmbar ist, ohne daß eine evtl. vorhandene, mehrere auf der Normprofiltragschiene angebrachte Installationsschaltgeräte miteinander verbindende Stromschiene zuvor demontiert werden muß, dadurch gekennzeichnet, daß der Schieber (15) ein die Nase (14) aufweisendes erstes Gleitstück (16), das als geschlossener, einen rechteckförmigen Innenraum (17) umgrenzender Ring ausgebildet ist, und ein im Innenraum (17) in Verschieberichtung des Schiebers verschiebbares zweites Gleitstück (26) aufweist, welches in der ersten Stellung in dem Innenraum am ersten Gleitstück verrastet ist, daß zwischen einem Gehäuseansatz und dem zweiten Gleitstück (26) eine Druckfeder (28) angeordnet ist, dergestalt, daß in der ersten Stellung die Feder über das zweite Gleitstück das erste Gleitstück gegen die Normprofiltragschiene drückt.

2. Vorrichtung nach Anspruch 1, dadurch gekennzeichnet, daß der Innenraum des ersten Gleitstückes (16) langgestreckt rechteckig ist, daß die Breite des zweiten Gleitstückes, gemessen in Richtung der Hutprofiltragschiene, etwa gleich ist wie die Breite des Innenraumes, gemessen in der gleichen Richtung, und daß die Länge des zweiten Gleitstückes, gemessen quer zur Längserstreckung der Normprofiltragschiene und in Richtung der Verschiebung des Schiebers (15) um ein bestimmtes Maß kleiner ist als die längere Seite des Innenraumes, in gleicher Richtung gemessen, so daß das zweite Gleitstück innerhalb des Innenraumes um einen bestimmten Betrag verschieblich ist.

3. Vorrichtung nach Anspruch 2, dadurch gekennzeichnet, daß das zweite Gleitstück (26) in dem Bereich des von der beweglichen Nase entfernt liegenden Quersteges anliegend an diesen am ersten Gleitstück verrastbar ist.

4. Vorrichtung nach einem der vorherigen Ansprüche, dadurch gekennzeichnet, daß am ersten Gleitstück (16) eine die Bewegung des Schiebers (15) hin zur Normprofilschiene (10) begrenzende Nase (24) angeformt ist, die mit einer Kante (25) am Gehäuse (11) zusammenwirkt.

5. Vorrichtung nach einem der vorherigen Ansprüche, dadurch gekennzeichnet, daß am zweiten Gleitstück (26) eine Nase (34) vorgesehen ist, die in der zweiten, Lösestellung hinter eine weitere Kante (36) am Gehäuse des Installationsgerätes (11) greift und somit ein Verschieben des zweiten Gleitstückes (26) aufgrund der Druckfeder (28) hin zur Normprofiltragschiene (10) verhindert.

6. Vorrichtung nach einem der vorherigen Ansprüche, dadurch gekennzeichnet, daß die Nase (34) in der ersten Stellung hinter eine weitere Gehäusekante greift und so ein Verschieben des Schiebers (15) aufgrund der Kraft der Druckfeder (28) hin zur Normprofiltragschiene (10) verhindert.

Fig. 1

Fig. 2

Fig. 3

Fig. 4

**Europäisches Patentamt**

**EUROPÄISCHER RECHERCHENBERICHT**

Nummer der Anmeldung

**EP 91 10 5425**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | DE-A-3 732 434 (RAHMSTORF) <br> * Spalte 3, Zeile 5 - Spalte 5, Zeile 50; Figuren 1, 3, 9 * <br> — — — | 1 | H 02 B 1/052 |
| A | US-A-4 018 413 (BAUER) <br> * Spalte 2, Zeilen 4 - 51; Figuren 1-5 * <br> — — — | 1 | |
| A | US-A-4 671 697 (ANDO ET AL) <br> * Zusammenfassung; Figuren 4-7 * <br> — — — — — | 1 | |
| | | | **RECHERCHIERTE SACHGEBIETE (Int. Cl.5)** |
| | | | H 02 B <br> H 01 R |

Der vorliegende Recherchenbericht wurde für alle Patentansprüche erstellt

| Recherchenort | Abschlußdatum der Recherche | Prüfer |
|---|---|---|
| Den Haag | 26 Juni 91 | WOODALL C.G. |